# EUROPEAN PATENT APPLICATION

(11) **EP 4 538 663 A1**
(43) Date of publication of application: **16.04.2025**
(21) Application number: 23819757.8
(22) Date of filing: 01.06.2023
(51) Int. Cl.: G01L 1/00, G01J 3/46, G01J 3/52

(54) **INFORMATION PROCESSING DEVICE, INFORMATION PROCESSING METHOD, AND INFORMATION PROCESSING PROGRAM**

(30) Priority: 08.06.2022 JP 2022093297
(71) Applicant: FUJIFILM Corporation, Tokyo 106-8620 (JP)
(72) Inventor: SASAHARA, Kenji, Tokyo 106-8620 (JP)
(74) Representative: Meissner Bolte Partnerschaft mbB
(86) International application number: PCT/JP2023/020542
(87) International publication number: WO 2023/238777

(57) **Abstract**

Provided is an information processing apparatus including at least one processor, in which the processor is configured to acquire a plurality of color forming member images obtained by imaging a color forming member, which forms a color with density distribution corresponding to an amount of energy applied thereto and derive the amount of energy applied to the color forming member based on each of the plurality of color forming member images by using characteristic data in which a relationship between the amount of energy applied to the color forming member and a color of the color forming member included in the color forming member images is determined in advance.

## Description

### BACKGROUND

### Technical Field

The present disclosure relates to an information processing apparatus, an information processing method, and an information processing program.

### Related Art

In the related art, a technique of measuring the amount of energy by using a color forming member that forms a color in accordance with the amount of energy in a case where energy (for example, pressure or ultraviolet rays) is applied thereto is known. Examples of such a color forming member include PRESCALE (registered trademark) (manufactured by FUJIFILM Corporation) with which a color formation density corresponding to applied pressure can be obtained.

For example, described in WO2021/235364A is a technique in which a pressure measurement sheet (for example, PRESCALE) is imaged after being displaced on a calibration sheet, the density, the size, the distortion, and the shape of a captured image are corrected based on the calibration sheet included in the captured image, and a density value of the pressure measurement sheet included in an image after the correction is converted into a pressure value. In addition, for example, disclosed in WO2022/059342A is a technique in which an image signal of a captured image obtained by imaging a measurement sheet that has formed a color at a density corresponding to the amount of external energy by using a sensor having a plurality of spectral sensitivities (for example, an R sensitivity, a G sensitivity, and a B sensitivity) is acquired and the surface distribution of the amount of external energy applied to the measurement sheet is derived based on a ratio between signals for each spectral sensitivity.

In a technique in the related art, each processing such as the imaging of a color forming member, derivation of the amount of energy, and an evaluation of the amount of energy is repeated for each color forming member. Therefore, the amount of work to be done by a user may increase as the number of color forming members increases. Therefore, in recent years, there has been a demand for a technique with which it is possible to further improve convenience in a case where a plurality of color forming members are to be imaged.

### SUMMARY

The present disclosure provides an information processing apparatus, an information processing method, and an information processing program with which it is possible to achieve an improvement in usability.

According to a first aspect of the present disclosure, there is provided an information processing apparatus comprising at least one processor. The processor is configured to acquire a plurality of color forming member images obtained by imaging a color forming member, which forms a color with density distribution corresponding to an amount of energy applied thereto, and derive the amount of energy applied to the color forming member based on each of the plurality of color forming member images by using characteristic data in which a relationship between the amount of energy applied to the color forming member and a color of the color forming member included in the color forming member images is determined in advance.

According to a second aspect of the present disclosure, in the information processing apparatus according to the first aspect, the processor may be configured to perform, for every predetermined number of processing units, processing of acquiring the plurality of color forming member images and processing of deriving the amount of energy applied to the color forming member based on each of the plurality of color forming member images.

According to a third aspect of the present disclosure, in the information processing apparatus according to the second aspect, the processor may be configured to perform, for every predetermined number of processing units, the processing of acquiring the plurality of color forming member images, the processing of deriving the amount of energy applied to the color forming member based on each of the plurality of color forming member images, and processing of performing an evaluation with respect to each of amounts of energy based on predetermined reference information.

According to a fourth aspect of the present disclosure, in the information processing apparatus according to the third aspect, the processor may be configured to perform a comprehensive evaluation based on a result of the evaluation performed with respect to each of the amounts of energy.

According to a fifth aspect of the present disclosure, in the information processing apparatus according to any one of the first to fourth aspects, the processor may be configured to store, in a database, the amount of energy derived based on each of the plurality of color forming member images as a single set of data.

According to a sixth aspect of the present disclosure, in the information processing apparatus according to any one of the first to fifth aspects, the processor may be configured to generate one combined image by combining the plurality of color forming member images and derive the amount of energy applied to the color forming member based on the combined image.

According to a seventh aspect of the present disclosure, in the information processing apparatus according to the sixth aspect, the processor may be configured to evaluate, based on predetermined reference information, the amount of energy derived based on the combined image.

According to an eighth aspect of the present disclosure, in the information processing apparatus according to the sixth or seventh aspect, the processor may be configured to derive distribution of the amount of energy applied to the color forming member based on the combined image and generate a two-dimensional graph showing the distribution of the amount of energy.

According to a ninth aspect of the present disclosure, in the information processing apparatus according to any one of the first to eighth aspects, at least one of the plurality of color forming member images may include a patch for calibration with respect to the color of the color forming member, and the processor may be configured to perform the calibration with respect to the color of the color forming member included in each of the plurality of color forming member images by using the patch included in the at least one of the color forming member images.

According to a tenth aspect of the present disclosure, in the information processing apparatus according to the ninth aspect, the processor may be configured to perform the calibration with respect to the color of the color forming member by using the patch in a case where the color forming member image includes the patch, and perform the calibration with respect to the color of the color forming member by using the patch included in another color forming member image in a case where the color forming member image does not include the patch.

According to an eleventh aspect of the present disclosure, there is provided an information processing method comprising processing of acquiring a plurality of color forming member images obtained by imaging a color forming member, which forms a color with density distribution corresponding to an amount of energy applied thereto and deriving the amount of energy applied to the color forming member based on each of the plurality of color forming member images by using characteristic data in which a relationship between the amount of energy applied to the color forming member and a color of the color forming member included in the color forming member images is determined in advance.

According to an eleventh aspect of the present disclosure, there is provided an information processing program causing a computer to execute processing of acquiring a plurality of color forming member images obtained by imaging a color forming member, which forms a color with density distribution corresponding to an amount of energy applied thereto and deriving the amount of energy applied to the color forming member based on each of the plurality of color forming member images by using characteristic data in which a relationship between the amount of energy applied to the color forming member and a color of the color forming member included in the color forming member images is determined in advance.

With the information processing apparatus, the information processing method, and the information processing program according to the aspects of the present disclosure, it is possible to achieve an improvement in usability.

### BRIEF DESCRIPTION OF THE DRAWINGS

Fig. 1 is a diagram showing an example of a schematic configuration of an information processing system.
Fig. 2 is a schematic view showing the way in which a color forming member image is captured.
Fig. 3 is a view showing an example of a color forming member and a calibration member.
Fig. 4 is a diagram showing an example of an imaging order.
Fig. 5 is a block diagram showing an example of hardware configurations of a terminal apparatus and a server apparatus.
Fig. 6 is a diagram showing an example of characteristic data.
Fig. 7 is a block diagram showing an example of functional configurations of the terminal apparatus and the server apparatus.
Fig. 8 is a diagram showing an example of a screen displayed on a display.
Fig. 9 is a diagram showing an example of a screen displayed on the display.
Fig. 10 is a flowchart showing an example of information processing of the terminal apparatus.
Fig. 11 is a flowchart showing an example of information processing of the server apparatus.
Fig. 12 is a diagram for description of a combined image.

### DETAILED DESCRIPTION

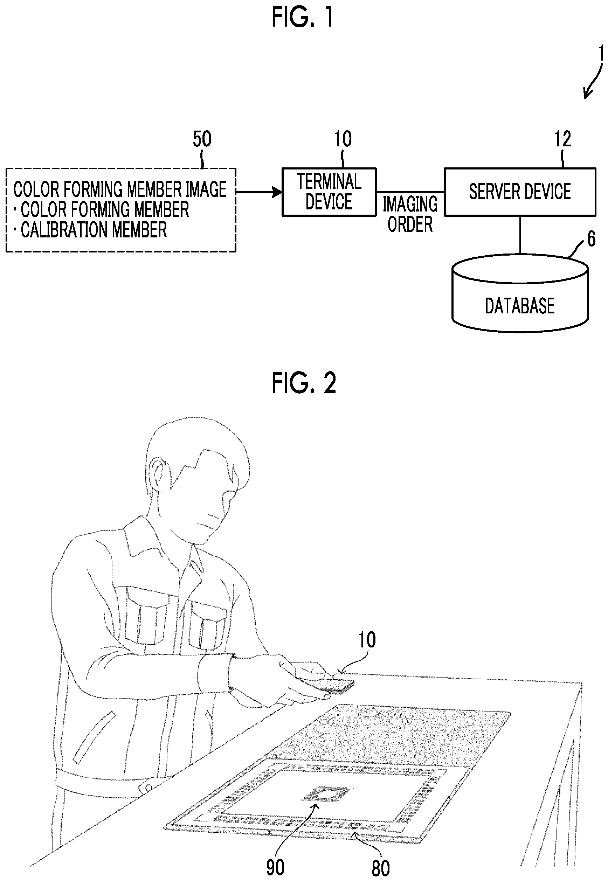

Hereinafter, an exemplary embodiment of the present disclosure will be described with reference to the drawings. First, a configuration of an information processing system 1 according to the embodiment of the present disclosure will be described with reference to Fig. 1. Fig. 1 is a diagram showing a schematic configuration of the information processing system 1. The information processing system 1 includes a terminal apparatus 10, a server apparatus 12, and a database 6. The terminal apparatus 10 and the server apparatus 12 are connected to each other such that the terminal apparatus 10 and the server apparatus 12 can communicate with each other via a wired or wireless network. The terminal apparatus 10 is an example of an information processing apparatus and a first information processing apparatus according to the embodiment of the present disclosure, and the server apparatus 12 is an example of a second information processing apparatus and an external device according to the embodiment of the present disclosure.

The information processing system 1 of the present exemplary embodiment is a system for measuring the amount of energy by using a color forming member 90 that forms a color with density distribution corresponding to the amount of energy applied thereto in a case where energy (for example, pressure, heat, and ultraviolet rays) is applied thereto. Specifically, the terminal apparatus 10 acquires an image obtained by imaging the color forming member 90 after application of energy and the amount of energy applied to the color forming member 90 is derived from the image.

The image acquired by the terminal apparatus 10 is transmitted to the server apparatus 12 and is stored in the database 6 by the server apparatus 12. Note that the way in which the server apparatus 12 and the database 6 are connected to each other is not particularly limited and for example, the server apparatus 12 and the database 6 may be connected to each other via a data bus or may be connected to each other via a network such as a network attached storage (NAS) and a storage area network (SAN).

As the color forming member 90, it is possible to apply PRESCALE (registered trademark) (manufactured by FUJIFILM Corporation) with which a color formation density corresponding to applied pressure can be obtained. The PRESCALE is obtained by applying a color former including microcapsules in which colorless dye is included and a color developer to a sheet-shaped support. In a case where pressure is applied to the PRESCALE, the microcapsules are broken, the colorless dye is adsorbed to the color developer, and a color is formed. In addition, since the color former includes a plurality of kinds of microcapsules having different sizes and strengths, the number of microcapsules that are broken depends on pressure applied to the PRESCALE and color optical density also depends on pressure applied to the PRESCALE. Therefore, by observing the color optical density, the magnitude of the pressure applied to the PRESCALE, pressure distribution, and the like can be measured.

In addition, for example, as the color forming member 90, THERMOSCALE (a product name) (manufactured by FUJIFILM Corporation) which forms a color corresponding to the amount of heat, UVSCALE (a product name) (manufactured by FUJIFILM Corporation) which forms a color corresponding to the amount of ultraviolet rays, or the like may also be applied.

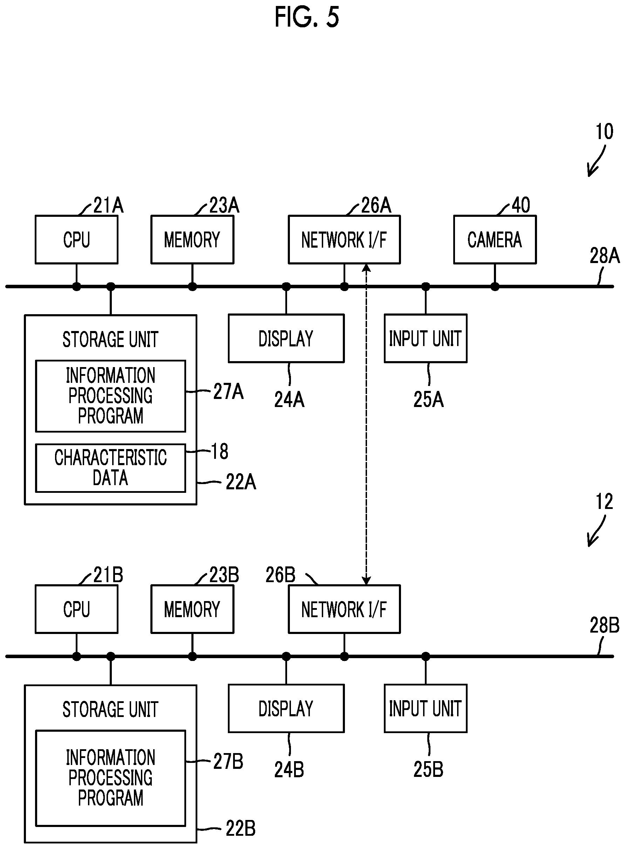

In the information processing system 1, as shown in Fig. 2, a user performs imaging by using a camera 40 (refer to Fig. 5) of the terminal apparatus 10 in a state where the color forming member 90 is placed on a calibration member 80. Accordingly, the terminal apparatus 10 acquires a color forming member image 50 including the calibration member 80 and the color forming member 90. In a case where the user performs imaging in such a manner, the color forming member image 50 may be influenced by the characteristics of the camera 40, illumination conditions (for example, the illuminance or color temperature) in an environment in which the imaging is performed, an imaging angle, an imaging distance, and the like. That is, the distortion, the inclination, the size, the shading, and the color of the color forming member image 50 may vary. The calibration member 80 is for correction of the influences thereof on the color forming member image 50.

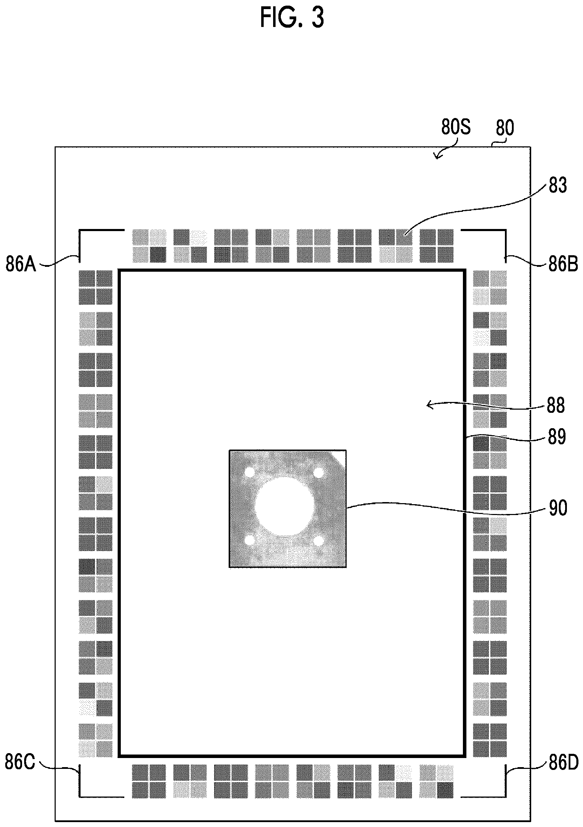

Fig. 3 shows an imaging target surface 80S of the calibration member 80 with the color forming member 90 placed thereon. The calibration member 80 is a support formed in a sheet-like shape or a plate-like shape, the support being configured to include, for example, paper, a resin, or the like. As shown in Fig. 3, the imaging target surface 80S includes a plurality of patches 83, four figures 86A to 86D, a central region 88, and a frame 89 that surrounds the outer edges of the central region 88. The colors of the plurality of patches 83 may be different from each other, or the colors of two or more patches 83 may be the same as each other.

The plurality of patches 83 are for calibration with respect to the color of the color forming member 90 in the color forming member image 50. The four figures 86A to 86D are for showing a range that is to be included in the angle of view in a case where a user images the calibration member 80 and the color forming member 90. The frame 89 is for shape correction regarding the distortion, the inclination, the size, and the like of the color forming member image 50.

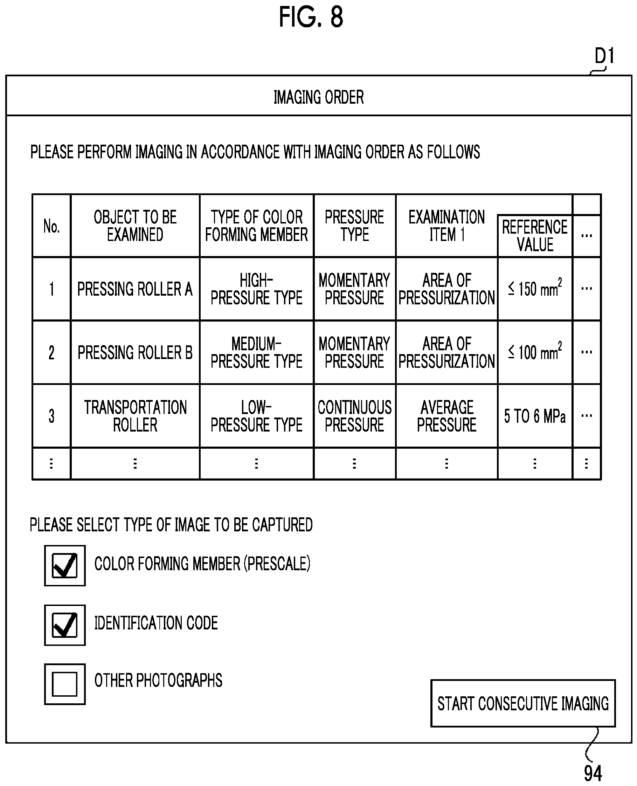

In addition, in the information processing system 1, imaging is performed in accordance with an imaging order. Specifically, an imaging order is created in at least one of the terminal apparatus 10 or the server apparatus 12, and the imaging order is shared between the terminal apparatus 10 and the server apparatus 12. A user confirms the imaging order displayed on a display 24A of the terminal apparatus 10 and images the color forming member 90 in accordance with the imaging order (refer to Fig. 8).

The imaging order includes an item related to accessory information related to the color forming member image 50. The accessory information may include, for example, information related to at least one of an object to be examined by means of the color forming member 90, the type of the color forming member 90, the type of energy applied to the color forming member 90, an imaging environment for the color forming member 90, or a person who images the color forming member 90. Examples of the type of the color forming member 90 include the type of the color forming member 90 corresponding to the type of measurable energy, such as PRESCALE, THERMOSCALE, and UVSCALE and the kind of PRESCALE, such as a low-pressure type, a medium-pressure type, and a high-pressure type. Examples of the type of energy include the type of energy, such as pressure, heat, and ultraviolet rays, and pressure such as momentary pressure (the magnitude of momentarily applied pressure) and continuous pressure (the time-integral of the magnitude of continuously applied pressure). Examples of the imaging environment include the room temperature, the humidity, a light source (the illuminance, the color temperature, and the like), and the like in an environment in which the color forming member 90 is imaged.

In addition, for example, the accessory information may include information related to at least one of the amount of energy applied to the color forming member 90, which is derived based on the color forming member image 50, or an evaluation for the amount of energy. In the terminal apparatus 10, various indicators such as a maximum value, an average value, and the area of a color formation region are derived in relation to the amount of energy applied to the color forming member 90 (details will be described later). Therefore, the imaging order may include an item of an indicator related to the amount of energy that is to be stored in the database 6. In addition, in the terminal apparatus 10, an evaluation based on reference information which is determined in advance in relation to the amount of energy is performed (details will be described later). Therefore, the imaging order may include the reference information used for the evaluation.

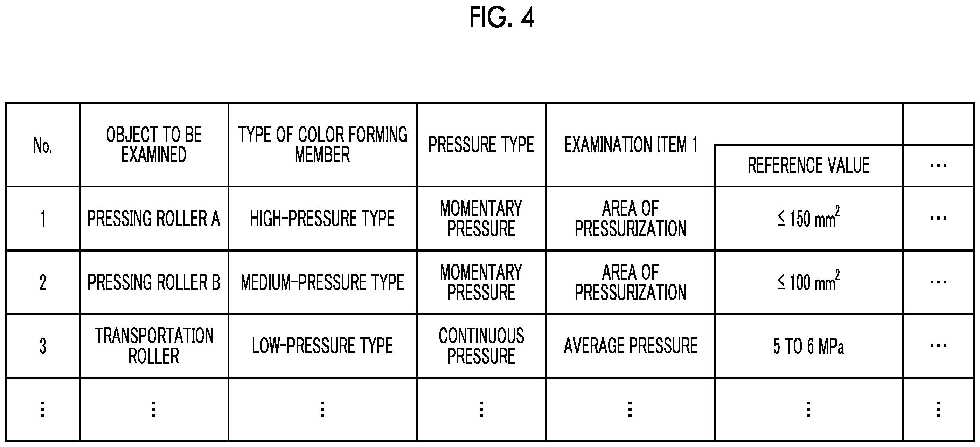

Fig. 4 shows an example of the imaging order. The imaging order shown in Fig. 4 includes items related to an object to be examined by means of the color forming member 90, the type of the color forming member 90, the type of energy applied to the color forming member 90 (a "pressure type"), an indicator (an "examination item 1") related to the amount of energy derived based on the color forming member image 50, and reference information (a "reference value") used for evaluation with respect to the indicator.

Hereinafter, the terminal apparatus 10 and the server apparatus 12 will be described in detail. First, an example of hardware configurations of the terminal apparatus 10 and the server apparatus 12 will be described with reference to Fig. 5. As shown in Fig. 5, the terminal apparatus 10 includes a central processing unit (CPU) 21A, a non-volatile storage unit 22A, and a memory 23A which is a temporary storage area. In addition, the terminal apparatus 10 includes the display 24A, such as a liquid crystal display, an input unit 25A, a network interface (I/F) 26A, and the camera 40. The CPU 21A, the storage unit 22A, the memory 23A, the display 24A, the input unit 25A, the network I/F 26A, and the camera 40 are connected to each other via a bus 28A such as a system bus and a control bus so that various types of information can be exchanged therebetween.

The storage unit 22A is realized by, for example, a storage medium, such as a hard disk drive (HDD), a solid state drive (SSD), and a flash memory. An information processing program 27A in the terminal apparatus 10 and characteristic data 18 are stored in the storage unit 22A. The CPU 21A reads out the information processing program 27A from the storage unit 22A, loads the information processing program 27A into the memory 23A, and executes the information processing program 27A. The CPU 21A is an example of a first processor and a processor according to the embodiment of the present disclosure.

The input unit 25A is for reception of an operation performed by a user, and is, for example, a touch panel, a button, a keyboard, a mouse, or the like. The network I/F 26A performs wired or wireless communication with the server apparatus 12 and other external devices (not shown). The camera 40 includes a sensor having a plurality of different spectral sensitivities, images a subject by means of the sensor under the control of the CPU 21A, and outputs an image signal thereof. As the terminal apparatus 10, for example, a smartphone, a tablet terminal, a wearable terminal, a personal computer, or the like having a camera function can be applied as appropriate.

As shown in Fig. 5, the server apparatus 12 includes a CPU 21B, a non-volatile storage unit 22B, and a memory 23B which is a temporary storage area. In addition, the server apparatus 12 includes a display 24B, such as a liquid crystal display, an input unit 25B, and a network I/F 26B. The CPU 21B, the storage unit 22B, the memory 23B, the display 24B, the input unit 25B, and the network I/F 26B, are connected to each other via a bus 28B such as a system bus and a control bus so that various types of information can be exchanged therebetween.

The storage unit 22B is realized by, for example, a storage medium, such as a hard disk drive (HDD), a solid state drive (SSD), and a flash memory. An information processing program 27B in the server apparatus 12 is stored in the storage unit 22B. The CPU 21B reads out the information processing program 27B from the storage unit 22B, loads the information processing program 27B into the memory 23B, and executes the information processing program 27B. The CPU 21B is an example of a second processor according to the embodiment of the present disclosure.

The input unit 25B is for reception of an operation performed by a user, and is, for example, a touch panel, a button, a keyboard, a mouse, or the like. The network I/F 26B performs wired or wireless communication with the terminal apparatus 10, the database 6, and other external devices (not shown). As the server apparatus 12, for example, a general-purpose computer in which a software program that provides a function of a database management system (DBMS) has been installed can be applied as appropriate.

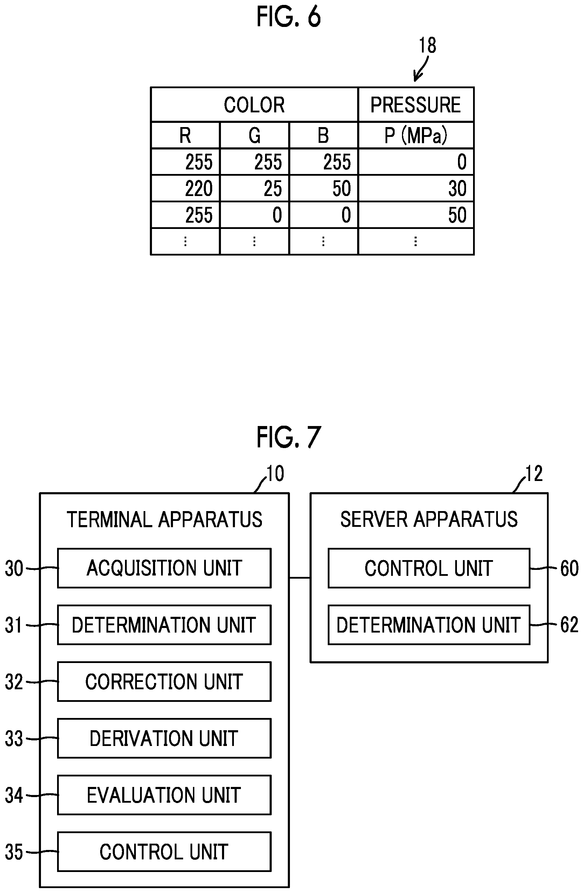

Fig. 6 shows an example of the characteristic data 18. The characteristic data 18 is data in which a relationship between the amount of energy applied to the color forming member 90 and the color of the color forming member 90 included in the color forming member image 50 is defined in advance. In Fig. 6, pressure is shown as an example of the amount of energy. In addition, as values indicating the color of the color forming member 90 in the color forming member image 50, red (R) values, green (G) values, and blue (B) values in the RGB color system are shown.

Next, an example of functional configurations of the terminal apparatus 10 and the server apparatus 12 will be described with reference to Fig. 7. In the following description, an aspect in which a plurality of color forming member images 50 are acquired in accordance with the imaging order of Fig. 4 will be described.

First, functions of the terminal apparatus 10 will be described. As shown in Fig. 7, the terminal apparatus 10 includes an acquisition unit 30, a determination unit 31, a correction unit 32, a derivation unit 33, an evaluation unit 34, and a control unit 35. With the CPU 21A executing the information processing program 27A, the CPU 21A functions as each of functional units which are the acquisition unit 30, the determination unit 31, the correction unit 32, the derivation unit 33, the evaluation unit 34, and the control unit 35.

Fig. 8 shows an example of a screen D1 that is displayed on the display 24A by the control unit 35 in a case where the imaging of the color forming member 90 is started. As shown in Fig. 8, the control unit 35 causes an imaging order to be displayed on the screen D1. A user who has confirmed the imaging order on the screen D1 selects a "start consecutive imaging" button 94. In a case where the "start consecutive imaging" button 94 is selected, the control unit 35 activates the camera 40, and the user starts the imaging of the color forming member 90 with the camera 40 in accordance with the imaging order.

The acquisition unit 30 acquires a plurality of color forming member images 50 obtained by imaging the color forming member 90 with the camera 40. As described above, the color forming member images 50 may include the calibration member 80 including the patches 83 for calibration of the color of the color forming member 90.

Note that at least one of the plurality of color forming member images 50 may include the patches 83 for calibration with respect to the color of the color forming member 90 and a part of the plurality of color forming member images 50 may not include the patches 83. This is because, regarding the plurality of color forming member images 50 that are imaged by the same imaging device and in the same imaging environment, there is a case where the patches 83 included in at least one color forming member image 50 can also be used for another color forming member image 50. That is, the user may image at least one of a plurality of color forming members 90 determined in the imaging order together with the calibration member 80 and for the other color forming members 90, the user may image only the color forming members 90 without imaging the calibration member 80.

In addition, the acquisition unit 30 may acquire accessory images related to the color forming member images 50. The accessory images may be, for example, images each including at least one of a text string or an identifier (for example, a bar code and a two-dimensional code) related to examination of the color forming member 90. For example, the acquisition unit 30 may acquire, as the accessory images, images each including a two-dimensional code indicating the identification information, the type, and the inspection item of the color forming member 90, the identification information and the type of an object to be examined by means of the color forming member 90, the identification information of an examiner, and the like. In addition, for example, the accessory images may be images each accompanied by examination and the imaging of the color forming member 90, such as a photograph of the object to be examined, a photograph of an imaging environment for the color forming member image 50, and a photograph of the face of the inspector.

The determination unit 31 determines whether an image obtained by the acquisition unit 30 is the color forming member image 50 or an accessory image. In addition, in a case where the determination unit 31 determines that the image acquired by the acquisition unit 30 is an accessory image, the determination unit 31 determines whether or not the accessory image includes at least one of a text string or an identifier. That is, the determination unit 31 determines whether the image acquired by the acquisition unit 30 is the color forming member image 50, an accessory image including various pieces of information, such as identification information, or an accessory image that does not include various pieces of information. Specifically, as shown in the screen D1 of Fig. 8, the determination unit 31 may receive the selection of the type of an image to be captured and may determine which of the selected types of images the image acquired by the acquisition unit 30 corresponds to. As a method for determining the type of an image, a well-known method such as pattern matching can be applied as appropriate.

Each functional unit executes predetermined processing in accordance with the result of determination performed by the determination unit 31. For example, in a case where it is determined that the image acquired by the acquisition unit 30 is an accessory image including at least one of a text string or an identifier, the determination unit 31 may analyze the at least one of the text string or the identifier included in the accessory image. For example, in the case of an accessory image including a two-dimensional code indicating the identification information of the color forming member 90, the determination unit 31 may analyze the two-dimensional code to obtain the identification information of the color forming member 90. In addition, for example, in the case of an accessory image including a hand-written or printed text string, the determination unit 31 may analyze the text string by using a known optical text recognition technology to obtain text data. Such information analyzed from the accessory image may be used as accessory information of the color forming member image 50.

Hereinafter, processing in each functional unit that is performed in a case where the determination unit 31 determines that an image acquired by the acquisition unit 30 is the color forming member image 50 will be described. The acquisition unit 30 acquires the characteristic data 18 stored in the storage unit 22A (refer to Fig. 6).

The correction unit 32 corrects at least one of the distortion, the inclination, the size, the shading, or the color of the color forming member image 50. Accordingly, the influence of the characteristics of the camera 40, illumination conditions (for example, the illuminance or color temperature) in an environment in which imaging is performed, an imaging angle, an imaging distance, and the like, which may influence the color forming member image 50 in a case where a user performs imaging, is corrected.

For example, the correction unit 32 may extract the frame 89 from the color forming member image 50 and may correct the distortion, the inclination, and the size of the color forming member image 50 based on the shape of the extracted frame 89. As a method of extracting the frame 89, a known method in which edge extraction processing or the like in an image is used can be applied as appropriate. For example, in a case where the frame 89 is rectangular as shown in Fig. 3, the correction unit 32 performs projective transformation, affine transformation, and the like such that an angle of 90 degrees is formed at each of four corners of the frame 89 extracted from the color forming member image 50 and performs shape correction for the distortion, the inclination, the size, and the like of the color forming member image 50.

In addition, for example, the correction unit 32 may perform shading correction with respect to the color forming member image 50. Shading is a variation in brightness on the color forming member image 50 that occurs due to a decrease in peripheral illumination attributable to an optical system of the camera 40, a variation in illuminance distribution in an illumination environment in which imaging is performed, and the like. As a shading correction method, a known method can be applied as appropriate.

In addition, for example, the correction unit 32 may perform calibration with respect to the color of the color forming member 90 included in the color forming member image 50 by using the patches 83 included in the color forming member image 50. This is because the color of the color forming member 90 is influenced by the characteristics of the camera 40, illumination conditions in an environment in which the imaging is performed, and the like. As a method for the calibration, a known method can be applied as appropriate. For example, a reference color may be stored in the storage unit 22A in advance for each of the patches 83 that the calibration member 80 includes and the correction unit 32 may adjust the color of the color forming member image 50 such that each of the colors of the patches 83 included in the color forming member image 50 coincides with the reference color.

In addition, as described above, there is a case where at least one of the plurality of color forming member images 50 includes the patches 83 and a part of the plurality of color forming member images 50 does not include the patches 83. In this case, the correction unit 32 may perform calibration with respect to the color of the color forming member 90 included in each of the plurality of color forming member images 50 by using the patches 83 included in at least one color forming member image 50. Specifically, it is preferable that the correction unit 32 performs calibration with respect to the color of the color forming member 90 by using the patches 83 in a case where the color forming member image 50 includes the patches 83 and performs calibration with respect to the color of the color forming member 90 by using the patches 83 included in another color forming member image 50 in a case where the color forming member image 50 does not include the patches 83.

That is, the correction unit 32 may execute the same calibration as in the case of the color forming member image 50 including the patches 83 for the color forming member image 50 not including the patches 83. On the other hand, for the color forming member image 50 including the patches 83, it is preferable to perform calibration by using the patches 83 included in the color forming member image 50 on a priority basis instead of the patches 83 included in other images.

Note that as described above, the calibration member 80 may include two or more patches 83 having the same color as each other. For example, two or more patches 83, which are formed to originally have the same color as each other, may be expressed in different colors in the color forming member image 50 due to the influence of the characteristics of the camera 40, illumination conditions in an environment in which imaging is performed, an imaging angle, an imaging distance, and the like. Therefore, for example, the correction unit 32 may adjust the color of the color forming member image 50 such that the average color of the patches 83 in the color forming member image 50 coincides with a reference color, the patches 83 being formed to have the same color as each other. In addition, for example, the correction unit 32 may adjust the color of the color forming member image 50 such that the color of the patch 83, of which the color in the color forming member image 50 is closest to a reference color among the patches 83 formed to have the same color as each other, coincides with the reference color.

In addition, the correction unit 32 may perform calibration by using a part of the plurality of patches 83 included in the color forming member image 50. In addition, for example, the patch 83 used for calibration performed by the correction unit 32 may differ depending on the type of the color forming member 90. For example, regarding PRESCALE which is an example of the color forming member 90, a plurality of kinds of PRESCALE for a low pressure, a medium pressure, a high pressure, and the like of which the measurable pressure ranges are different from each other are manufactured. In addition, for example, as the color forming member 90, THERMOSCALE, UVSCALE, and the like also can be used instead of PRESCALE.

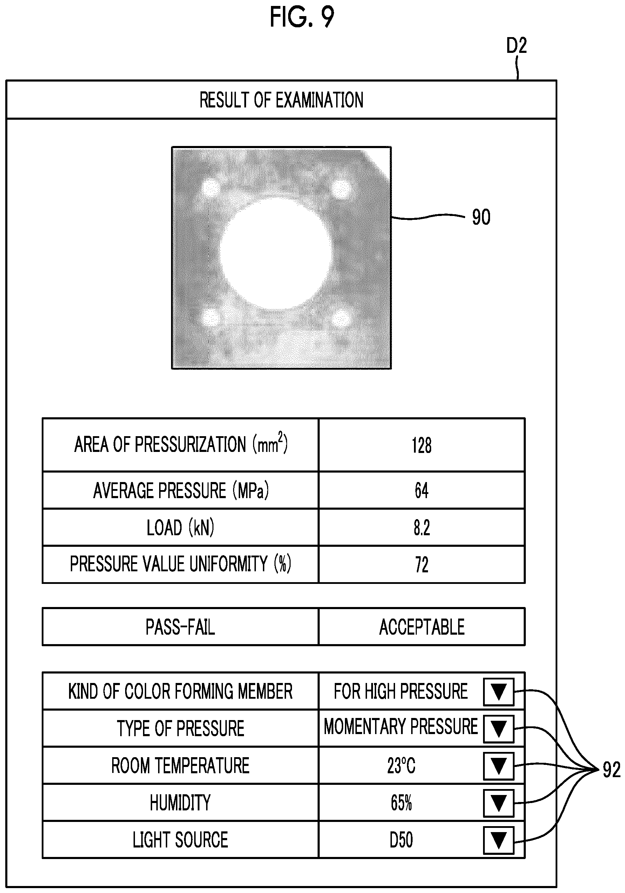

Therefore, the correction unit 32 may perform calibration by using a part of the plurality of patches 83 included in the color forming member image 50, the part of the patches 83 being determined in advance in accordance with the type of the color forming member 90 included in the color forming member image 50. A correspondence relationship between the type of the color forming member 90 and the patches 83 used for calibration may be stored in, for example, the storage unit 22A in advance. The type of the color forming member 90 included in the color forming member image 50 may be input by, for example, a user via the input unit 25A (refer to Fig. 9) or an identification code indicating the type of the color forming member 90 may be attached to the color forming member 90 so that the type of the color forming member 90 is specified in a case where the identification code is read by the correction unit 32.

The derivation unit 33 derives the amount of energy applied to the color forming member 90 based on the color of each of the plurality of color forming member images 50 by using the characteristic data 18 acquired by the acquisition unit 30. Specifically, the derivation unit 33 derives the amount of energy based on the color forming member image 50 after correction of at least one of the distortion, the inclination, the size, the shading, or the color thereof, the correction being performed by the correction unit 32. Note that the characteristic data 18 may be prepared for each type of the color forming member 90 (for example, a low-pressure type, a medium-pressure type, and a high-pressure type) in advance and be stored in the storage unit 22A. In this case, the derivation unit 33 may derive the amount of energy by using the characteristic data 18 corresponding to the type of the color forming member 90 included in the color forming member image 50.

In addition, the derivation unit 33 may derive various indicators related to the amount of energy applied to the color forming member 90. Examples of the various indicators include energy distribution, which is obtained by deriving the amount of energy for each pixel of a region (hereinafter, referred to as a "color formation region") of the color forming member 90 in which a color has been formed, and representative values such as the maximum value, the minimum value, the average value, and the median of the amounts of energy in the color formation region. In addition, examples of the various indicators include the area of the color formation region, the proportion of the area of a portion of the color formation region in which the amount of energy falls within a predetermined range, the uniformity in amount of energy in the color formation region, a load (the product of the area of the color formation region and the average value of the amount of energy) at the color formation region, and the like. In addition, in a case where a reference for the degree of color formation (that is, the amount of energy and energy distribution) of the color forming member 90 is determined in advance, examples of the various indicators include the rate of match and the rate of deviation with respect to the reference.

The evaluation unit 34 evaluates, based on predetermined reference information, the amount of energy derived by the derivation unit 33. The reference information is, for example, a threshold value related to the rate of match and the rate of deviation with respect to a predetermined limit sample related to the degree of color formation (the amount of energy and energy distribution) of the color forming member 90 and upper and lower limit values of the various indicators related to the amount of energy. The evaluation unit 34 may perform a pass-fail evaluation in accordance with whether or not the amount of energy derived by the derivation unit 33 meets criteria. In addition, the evaluation unit 34 may receive designation of a partial region of the color forming member 90 in the color forming member image 50 for which an evaluation is to be performed and may perform the evaluation with respect to the partial region. The reference information may be included in, for example, an imaging order, or may be stored in advance in the storage unit 22A.

In addition, the evaluation unit 34 may perform a comprehensive evaluation based on the result of an evaluation performed for each of the amounts of energy derived by the derivation unit 33. For example, the evaluation unit 34 may perform comprehensive a pass-fail evaluation based on whether or not the ratio of the color forming member images 50 evaluated as being acceptable to the plurality of color forming member images 50 acquired in accordance with an imaging order exceeds a threshold value.

It is preferable that processing of each functional unit that is related to the plurality of color forming member images 50 is performed for every predetermined number of processing units. That is, it is preferable that processing performed by the acquisition unit 30, the determination unit 31, the correction unit 32, the derivation unit 33, and the evaluation unit 34 is collectively performed (so-called batch processing) for every two or more color forming member images 50 instead of being repeated for each color forming member image 50. In particular, it is preferable that processing of acquiring (capturing) the plurality of color forming member images 50, processing of deriving the amount of energy applied to the color forming member 90 based on each of the plurality of color forming member images 50, and processing of performing an evaluation with respect to each of the amounts of energy based on the predetermined reference information are performed for every predetermined number of processing units. For example, it is preferable that, after five color forming member images 50 are acquired (captured), a transition to processing of deriving the amount of energy for all of the five color forming member images 50 is made.

The control unit 35 performs control such that the color forming member image 50, the amount of energy derived by the derivation unit 33, and the result of an evaluation performed by the evaluation unit 34 are displayed on the display 24A. Fig. 9 shows an example of a screen D2 displayed on the display 24A by the control unit 35. On the screen D2, an image of a part of the color forming member image 50 that corresponds to the color forming member 90, various indicators related to the amount of energy derived from the color forming member 90, and the result of an evaluation are displayed.

As shown on the screen D2, the control unit 35 may perform control such that a part of the color forming member 90 is extracted from the color forming member image 50 and is displayed on the display 24A. In addition, as the color forming member image 50 to be displayed on the display 24A, the control unit 35 may use the color forming member image 50 after correction of at least one of the distortion, the inclination, the size, the shading, or the color thereof, the correction being performed by the correction unit 32. The "area of pressurization" on the screen D2 means the area of the above-described color formation region. The "average pressure" means the average value of the amounts of energy in the above-described color formation region. The "load" means the product of the area of pressurization and the average pressure. The "pressure value uniformity" means the pressure value uniformity in the color formation region.

In addition, accessory information related to the color forming member image 50 may be input to the control unit 35. On the screen D2, as an example of the accessory information related to the color forming member image 50, the kind of the color forming member 90, the type of pressure, the room temperature, the humidity, and the light source are displayed and pull-down menus 92 for the inputting of the kind of the color forming member 90, the type of pressure, the room temperature, the humidity, and the light source are displayed. The type of pressure is, for example, momentary pressure indicating the magnitude of pressure momentarily applied to the PRESCALE and continuous pressure indicating the time-integral of the magnitude of pressure continuously applied to the PRESCALE. The light source is, for example, a standard illuminant D65 and auxiliary illuminants D50, D55, and D75 specified in JIS Z 8720: 2012. In addition, for example, as the accessory information, identification information of the calibration member 80, the color forming member 90, a user who has applied energy to the color forming member 90, a user who has imaged the color forming member 90, and the like, the result of an evaluation that is performed by a user for the amount of energy, and various examination conditions may be used.

In addition, the control unit 35 transmits the color forming member image 50 to the server apparatus 12 via the network I/F 26A. Specifically, the control unit 35 transmits, to the server apparatus 12, at least one of the color forming member image 50 before correction performed by the correction unit 32, the color forming member image 50 after the correction, or an image of a part of the color forming member image 50 that corresponds to the color forming member 90 and that is extracted from the color forming member image 50.

In addition, the control unit 35 may transmit accessory information of the color forming member image 50 to the server apparatus 12. As described above, accessory information includes the amount of energy derived by the derivation unit 33, the result of an evaluation performed by the evaluation unit 34, an accessory image acquired by the acquisition unit 30, information that is analyzed from a text string, an identifier, and the like included in the accessory image by the determination unit 31, input information, and the like. The control unit 35 may transmit information about an item in the accessory information that is designated in an imaging order. In other words, the control unit 35 may exclude, from targets to be transmitted to the server apparatus 12, an item in the accessory information that is not designated in the imaging order. For example, even in a case where the minimum value of the amount of energy is derived by the derivation unit 33, the control unit 35 may not transmit the minimum value of the amount of energy to the server apparatus 12 in a case where there is no item related to the minimum value of the amount of energy in the imaging order.

Next, functions of the server apparatus 12 will be described. As shown in Fig. 7, the server apparatus 12 includes a control unit 60 and a determination unit 62. With the CPU 21B executing the information processing program 27B, the CPU 21B functions as each of functional units which are the control unit 60 and the determination unit 62.

The control unit 60 stores, in the database 6, the color forming member image 50 and accessory information that are received from the terminal apparatus 10 via the network I/F 26B. In addition, the control unit 35 stores, in the database 6, the plurality of color forming member images 50 and accessory information included in one imaging order as a set of data. That is, the control unit 60 stores, in the database 6, the amount of energy derived based on each of the plurality of color forming member images 50 as a single set of data.

The determination unit 62 determines whether or not the color forming member image 50 stored in the database 6 satisfies a predetermined condition. Specifically, the determination unit 62 may determine whether or not the color forming member image 50 stored in the database 6 is compliant with a predetermined imaging order.

For example, there may be a case where various data such as color forming member image 50 is not appropriately transmitted from the terminal apparatus 10 to the server apparatus 12 due to a temporary communication failure. Therefore, the determination unit 62 may determine whether or not the number of color forming member images 50 determined in the imaging order and the number of color forming member images 50 stored in the database 6 coincide with each other. For example, in a case where the imaging order includes orders corresponding to 30 cases, the determination unit 62 may determine whether or not the color forming member images 50 corresponding to 30 cases are stored in the database 6.

In addition, there may be a case where a user performs examination without following the imaging order although the number of cases is correct. Therefore, the determination unit 62 may determine whether or not an item that is related to accessory information and that is determined in the imaging order and accessory information of the color forming member image 50 stored in the database 6 coincide with each other. For example, a case where the "pressing roller A" of "No. 1" in the imaging order shown in Fig. 4 is erroneously examined by means of the color forming member 90 of a "low-pressure type" and storage into the database 6 is also performed in such a manner although the "pressing roller A" is to be examined by means of the color forming member 90 of a "high-pressure type" will be assumed. In this case, the determination unit 62 may determine that the imaging order and accessory information stored in the database 6 do not coincide with each other. In addition, for example, a case where "200mm²" is derived as the "area of pressurization" of the "pressing roller A" of "No. 1" in the imaging order shown in Fig. 4 as a result of examination and storage into the database 6 is also performed in such a manner although the "area of pressurization" of the "pressing roller A" is to be "equal to or smaller than 150 mm²" will be assumed. In this case, the determination unit 62 may determine that the imaging order and accessory information stored in the database 6 do not coincide with each other.

In a case where the determination unit 62 determines that the color forming member image 50 stored in the database 6 does not satisfy the predetermined condition, the control unit 60 may request the terminal apparatus 10 to re-transmit the color forming member image 50. In a case where the control unit 35 of the terminal apparatus 10 receives a request for re-transmission from the server apparatus 12, the control unit 35 of the terminal apparatus 10 may re-transmit the color forming member image 50 to the server apparatus 12.

In addition, in a case where the determination unit 62 determines that the color forming member image 50 stored in the database 6 does not satisfy the predetermined condition, the control unit 60 may notify the terminal apparatus 10 that the color forming member image 50 stored in the database 6 does not satisfy the predetermined condition. In a case where the control unit 35 of the terminal apparatus 10 receives notification indicating that the color forming member image 50 stored in the database 6 does not satisfy the predetermined condition from the server apparatus 12, the control unit 35 may notify a user that the color forming member image 50 stored in the database 6 does not satisfy the predetermined condition. Note that means for notification is not particularly limited and for example, notification may be displayed on the display 24A and notification may be performed through a sound.

In addition, even in a case where the determination unit 62 determines that the color forming member image 50 stored in the database 6 satisfies the predetermined condition, the control unit 60 may notify the terminal apparatus 10 that the color forming member image 50 stored in the database 6 satisfies the predetermined condition. The control unit 35 of the terminal apparatus 10 may cause the color forming member image 50 to be kept stored in the storage unit 22A in preparation for a request for re-transmission until a predetermined period (for example, one month) elapses after transmission of the color forming member image 50 to the server apparatus 12. Meanwhile, in a case where notification indicating that the color forming member image 50 stored in the database 6 satisfies the predetermined condition is received from the server apparatus 12, the color forming member image 50 for which the notification is received may be deleted from the storage unit 22A even before the predetermined period elapses.

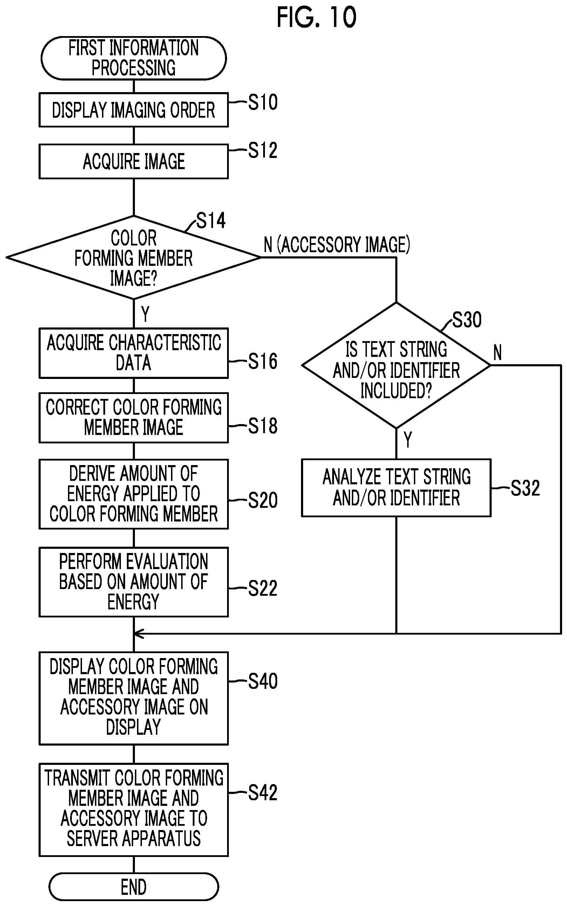

Next, the action of the terminal apparatus 10 will be described with reference to Fig. 10. In the terminal apparatus 10, the CPU 21A executes the information processing program 27A so that first information processing shown in Fig. 10 is executed. The first information processing is executed, for example, in a case where a user gives an instruction to start execution via the input unit 25A.

In step S10, the control unit 35 causes the display 24A to display an imaging order. In step S12, the acquisition unit 30 acquires an image captured by the camera 40. Here, candidates of the image acquired by the acquisition unit 30 include the color forming member image 50 captured in accordance with the imaging order displayed in step S10 and an accessory image related to the color forming member image 50. In addition, the candidates include an accessory image including a text string and/or an identifier indicating accessory information and an accessory image not including a text string and/or an identifier among accessory images. In step S14, the determination unit 31 determines whether the image acquired in step S12 is the color forming member image 50 or the accessory image.

In a case where it is determined in step S14 that the image acquired in step S12 is the color forming member image 50 (Y in step S14), the process proceeds to step S16. In step S16, the acquisition unit 30 acquires the characteristic data 18 from the storage unit 22A. In step S18, the correction unit 32 corrects at least one of the distortion, the inclination, the size, the shading, or the color of the color forming member image 50 acquired in step S12. In step S20, the derivation unit 33 derives the amount of energy applied to the color forming member 90 based on the color forming member image 50 corrected in step S18 by using the characteristic data 18 acquired in step S16. In step S22, the evaluation unit 34 evaluates, based on predetermined reference information, the amount of energy derived in step S20.

Meanwhile, in a case where it is determined in step S14 that the image acquired in step S12 is not the color forming member image 50 and is the accessory image (N in step S14), the process proceeds to step S30. In step S30, the determination unit 31 determines whether or not the accessory image acquired in step S12 includes at least one of a text string or an identifier. For example, in a case where it is determined that the accessory image includes at least one of the text string or the identifier (Y in step S30), the process proceeds to step S32 and the determination unit 31 analyzes the at least one of the text string or the identifier included in the accessory image.

After step S22, after step S32, or in a case where it is determined in step S30 that the accessory image does not include both of the text string and the identifier (N in step S30), the process proceeds to step S40. In step S40, the control unit 35 performs control such that the color forming member image 50 corrected in step S18 and the accessory information of the color forming member image 50 are displayed on the display 24A. Here, the accessory information includes at least one of the amount of energy derived in step S20, the result of the evaluation in step S22, the accessory image, or at least one of the text string or the identifier that is analyzed in step S32 and that is included in the accessory image. In step S42, the control unit 35 transmits the color forming member image 50 and the accessory information to the server apparatus 12 and the first information processing ends.

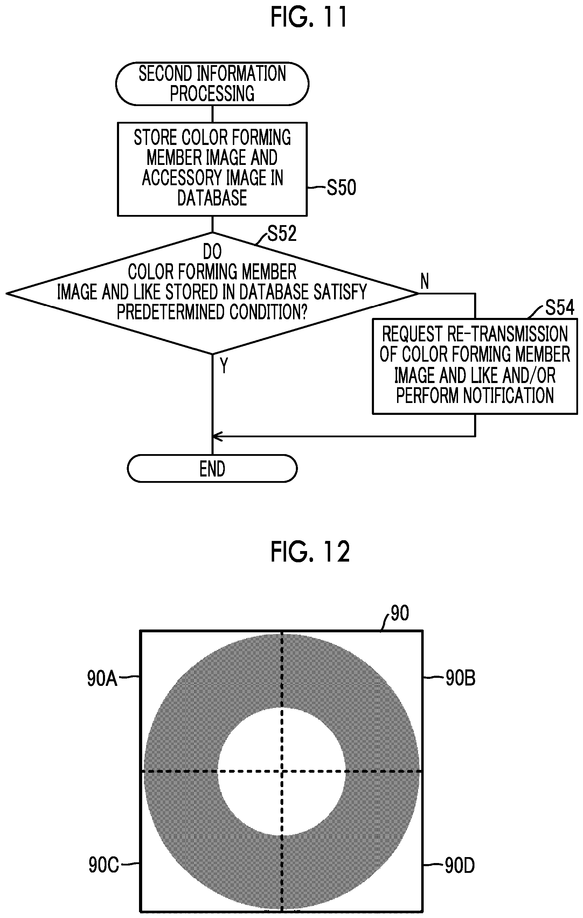

Next, the action of the server apparatus 12 will be described with reference to Fig. 11. In the server apparatus 12, the CPU 21B executes the information processing program 27B so that second information processing shown in Fig. 11 is executed. The second information processing is started, for example, in a case where a color forming member image is received from the terminal apparatus 10.

In step S50, the control unit 60 stores, in the database 6, the color forming member image 50 and the accessory information received from the terminal apparatus 10. In step S52, the determination unit 62 determines whether or not the color forming member image 50 and the accessory information stored in the database 6 in step S10 satisfy a predetermined condition. In a case where it is determined that the condition is satisfied, the second information processing ends.

Meanwhile, in a case where it is determined in step S52 that the condition is not satisfied, the process proceeds to step S54. In step S54, the control unit 60 may request the terminal apparatus 10 to re-transmit the color forming member image 50 and the accessory information. In addition, the control unit 60 may notify the terminal apparatus 10 that the color forming member image 50 and the accessory information stored in the database 6 do not satisfy the predetermined condition. In a case where step S54 is finished, the second information processing ends.

As described above, the information processing system 1 according to an aspect of the present disclosure includes the first information processing apparatus (the terminal apparatus 10) including at least one first processor, and the second information processing apparatus (the server apparatus 12) including at least one second processor. The first processor acquires the color forming member image 50 obtained by imaging the color forming member 90, which forms a color with density distribution corresponding to an amount of energy applied thereto, and transmits the color forming member image 50 to the second information processing apparatus. The second processor stores, in the database 6, the color forming member image 50 received from the first information processing apparatus. The first processor or the second processor determines whether or not the color forming member image 50 stored in the database 6 satisfies a predetermined condition.

That is, with the information processing system 1 according to the aspect, in a case where various data, such as the color forming member image 50 captured by the terminal apparatus 10, is to be consolidated into the server apparatus 12, it is possible to determine whether or not the data to be consolidated into the server apparatus 12 has been appropriately consolidated. Therefore, various data acquired in the terminal apparatus 10 can be appropriately consolidated into the server apparatus 12, so that an improvement in usability can be achieved.

**In** addition, an information processing apparatus (the terminal apparatus 10) according to an aspect of the present disclosure includes at least one processor, and the processor is configured to acquire the plurality of color forming member images 50 obtained by imaging the color forming member 90, which forms a color with density distribution corresponding to the amount of energy applied thereto, and derive the amount of energy applied to the color forming member 90 based on each of the plurality of color forming member images 50 by using the characteristic data 18 in which a relationship between the amount of energy applied to the color forming member 90 and the color of the color forming member 90 included in the color forming member images 50 is determined in advance.

That is, with the information processing apparatus (the terminal apparatus 10) according to the aspect, the amount of energy can be derived for each of the plurality of color forming member images 50. Therefore, in a case where a plurality of times of examination are to be consecutively performed, imaging and derivation of the amount of energy can be smoothly performed, so that an improvement in usability can be achieved.

In addition, an information processing apparatus (the terminal apparatus 10) according to an aspect of the present disclosure includes at least one processor, and the processor is configured to acquire at least one of the color forming member image 50 obtained by imaging the color forming member 90, which forms a color with density distribution corresponding to the amount of energy applied thereto, or an accessory image related to the color forming member image 50 and determine whether or not the acquired image is the color forming member image 50 or the accessory image.

That is, with the information processing apparatus (the terminal apparatus 10) according to the aspect, it is possible to reduce an effort taken by a user to determine whether the acquired image is the color forming member image 50 or the accessory image or to input the type of the image. In addition, even in a case where the color forming member image 50 and the accessory image are not distinguished from each other at the time of imaging, the type of the image can be determined later. Therefore, an improvement in usability can be achieved.

Note that in the above-described exemplary embodiment, the server apparatus 12 may have a part of the functions of the terminal apparatus 10. For example, the server apparatus 12 may execute a function of the derivation unit 33 (derivation of the amount of energy based on the color forming member image 50) instead of the terminal apparatus 10. Similarly, the terminal apparatus 10 may have a part of the functions of the server apparatus 12. For example, the terminal apparatus 10 may execute a function of the determination unit 62 (determination on whether or not the color forming member image 50 stored in the database 6 satisfies the predetermined condition) instead of the server apparatus 12.

In addition, in the above-described exemplary embodiment, an embodiment in which the terminal apparatus 10 acquires the plurality of color forming member images 50 in accordance with the imaging order in Fig. 4 has been described. However, the present disclosure is not limited thereto. For example, a technique according to the present exemplary embodiment can also be applied to an embodiment in which at least one color forming member image 50 is acquired.

In addition, as the plurality of color forming member images 50 in the above-described exemplary embodiment, images obtained by imaging one color forming member 90 divided into a plurality of regions as shown in Fig. 12 can be applied. Fig. 12 shows the one color forming member 90 divided into four regions 90A to 90D. Examples of a situation suitable for such division include a case where the color forming member 90 that is large to a degree that the color forming member 90 is difficult to image at once with the camera 40 of the terminal apparatus 10 (a smartphone) is to be imaged. ()

In addition, in this case, the acquisition unit 30 may combine the plurality of color forming member images 50 obtained by imaging the plurality of regions 90A to 90D to generate one combined image. In addition, the derivation unit 33 may derive the amount of energy applied to the color forming member 90 based on the combined image. In addition, in this case, the derivation unit 33 may derive distribution of the amount of energy applied to the color forming member 90 based on the combined image and generate a two-dimensional graph (for example, a heat map) showing the distribution of the amount of energy. In addition, the evaluation unit 34 may evaluate, based on predetermined reference information, the amount of energy derived based on the combined image.

In addition, in each exemplary embodiment described above, an embodiment in which the correction unit 32 performs shading correction of the color forming member image 50 and the derivation unit 33 derives the amount of energy based on the color forming member image 50 after the shading correction has been described. However, the present disclosure is not limited thereto. For example, disclosed in WO2022/059342A is using a ratio between signals for each spectral sensitivity of an image to solve unevenness in density value surface distribution in an image without performing shading correction. The derivation unit 33 may derive a ratio between signals for each spectral sensitivity of the color forming member image 50 and derive the amount of energy based on the ratio by using the technique disclosed in WO2022/059342A. In this case, the correction unit 32 may not perform the shading correction of the color forming member image 50.

In addition, in each exemplary embodiment described above, an embodiment in which the camera 40 provided in the terminal apparatus 10 is used as an imaging device for the color forming member image 50 has been described. However, the present disclosure is not limited thereto. For example, as the imaging device, a digital camera, a scanner, or the like outside the terminal apparatus 10 may be used. In this case, the terminal apparatus 10 may not include the camera 40.

In addition, in each exemplary embodiment described above, an embodiment in which the color forming member 90 and the calibration member 80 are imaged together for correction of at least one of the distortion, the inclination, the size, the shading, or the color of the color forming member image 50 has been described. However, the present disclosure is not limited thereto. For example, in a case where a scanner is used as the imaging device, it is possible to suppress a variation in distortion, inclination, size, shading, color, and the like of the color forming member image 50. In this case, only the color forming member 90 may be imaged without imaging the calibration member 80. In addition, in this case, the functions of the correction unit 32 may be omitted.

In addition, in each exemplary embodiment described above, for example, various processors as follows can be used as the hardware structure of a processing unit that executes various kinds of processing, such as the acquisition unit 30, the determination unit 31, the correction unit 32, the derivation unit 33, the evaluation unit 34, the control unit 35, the control unit 60, and the determination unit 62. As described above, the various processors include a programmable logic device (PLD) as a processor of which the circuit configuration can be changed after manufacture, such as a field programmable gate array (FPGA), a dedicated electrical circuit as a processor having a dedicated circuit configuration for executing specific processing such as an application specific integrated circuit (ASIC), and the like, in addition to the CPU as a general-purpose processor that functions as various processing units by executing software (program).

One processing unit may be composed of one of the various processors or may be composed of a combination of two or more processors of the same type or different types (for example, a combination of a plurality of FPGAs or a combination of a CPU and an FPGA). In addition, a plurality of processing units may be composed of one processor.

As an example of the plurality of processing units composed of one processor, first, the present disclosure includes an aspect in which one processor is composed of a combination of one or more CPUs and software, and the processor functions as the plurality of processing units, as represented by a computer such as a client and a server. Second, the present disclosure includes an aspect of using a processor that implements functions of the entire system including the plurality of processing units in one integrated circuit (IC) chip, as represented by a system on chip (SoC). As described above, various processing units are configured by using one or more of the above-described various processors as the hardware structure.

Furthermore, more specifically, an electric circuit (circuitry) in which circuit elements such as semiconductor elements are combined can be used as the hardware structure of the various processors.

In addition, in each exemplary embodiment described above, an aspect in which the information processing program 27A is stored (installed) in the storage unit 22A in advance and the information processing program 27B is stored in the storage unit 22B in advance has been described. However, the present disclosure is not limited thereto. The information processing program 27A and/or the information processing program 27B may be provided in a state of being recorded on a recording medium, such as a compact disc read only memory (CD-ROM), a digital versatile disc read only memory (DVD-ROM), or a universal serial bus (USB) memory. In addition, the information processing program 2727A and/or the information processing program 27B may be downloaded from an external device via a network. Furthermore, in addition to the information processing program, the present disclosed technology is applied to a storage medium that stores the information processing program in a non-transitory manner.

In the present disclosed technology, the above-described exemplary embodiment and an example can be appropriately combined with each other. Contents described and shown above are for detailed description of a part according to the present disclosed technology and are merely an example of the present disclosed technology. For example, description of the above-described configurations, functions, actions, and effects is description related to an example of configurations, functions, actions, and effects of parts related to the present disclosed technology. Therefore, it is needless to say that unnecessary parts may be deleted, or new elements may be added or replaced with respect to the above-described contents and illustrated contents within a scope not departing from the spirit of the present disclosed technology.

The disclosure of JP2022-093297 filed on June 8, 2022 in Japan is incorporated in the present specification by reference in its entirety. All documents, patent applications, and technical standards described in the present specification are incorporated in the present specification by reference to the same extent as in a case where the individual documents, patent applications, and technical standards are specifically and individually stated to be incorporated by reference.

## Claims

1. An information processing apparatus comprising at least one processor,
wherein the processor is configured to:
acquire a plurality of color forming member images obtained by imaging a color forming member, which forms a color with density distribution corresponding to an amount of energy applied thereto; and
derive the amount of energy applied to the color forming member based on each of the plurality of color forming member images by using characteristic data in which a relationship between the amount of energy applied to the color forming member and a color of the color forming member included in the color forming member images is determined in advance.

2. The information processing apparatus according to claim 1,
wherein the processor is configured to perform, for every predetermined number of processing units, processing of acquiring the plurality of color forming member images and processing of deriving the amount of energy applied to the color forming member based on each of the plurality of color forming member images.

3. The information processing apparatus according to claim 2,
wherein the processor is configured to perform, for every predetermined number of processing units, the processing of acquiring the plurality of color forming member images, the processing of deriving the amount of energy applied to the color forming member based on each of the plurality of color forming member images, and processing of performing an evaluation with respect to each of amounts of energy based on predetermined reference information.

4. The information processing apparatus according to claim 3,
wherein the processor is configured to perform a comprehensive evaluation based on a result of the evaluation performed with respect to each of the amounts of energy.

5. The information processing apparatus according to claim 1,
wherein the processor is configured to store, in a database, the amount of energy derived based on each of the plurality of color forming member images as a single set of data.

6. The information processing apparatus according to claim 1,
wherein the processor is configured to:
generate one combined image by combining the plurality of color forming member images; and
derive the amount of energy applied to the color forming member based on the combined image.

7. The information processing apparatus according to claim 6,
wherein the processor is configured to evaluate, based on predetermined reference information, the amount of energy derived based on the combined image.

8. The information processing apparatus according to claim 6,
wherein the processor is configured to:
derive distribution of the amount of energy applied to the color forming member based on the combined image; and
generate a two-dimensional graph showing the distribution of the amount of energy.

9. The information processing apparatus according to claim 1,
wherein at least one of the plurality of color forming member images includes a patch for calibration with respect to the color of the color forming member, and
the processor is configured to perform the calibration with respect to the color of the color forming member included in each of the plurality of color forming member images by using the patch included in the at least one of the color forming member images.

10. The information processing apparatus according to claim 9,
wherein the processor is configured to:
perform the calibration with respect to the color of the color forming member by using the patch in a case where the color forming member image includes the patch; and
perform the calibration with respect to the color of the color forming member by using the patch included in another color forming member image in a case where the color forming member image does not include the patch.

11. An information processing method comprising processing of:
acquiring a plurality of color forming member images obtained by imaging a color forming member, which forms a color with density distribution corresponding to an amount of energy applied thereto; and
deriving the amount of energy applied to the color forming member based on each of the plurality of color forming member images by using characteristic data in which a relationship between the amount of energy applied to the color forming member and a color of the color forming member included in the color forming member images is determined in advance.

12. An information processing program causing a computer to execute processing of:
acquiring a plurality of color forming member images obtained by imaging a color forming member, which forms a color with density distribution corresponding to an amount of energy applied thereto; and
deriving the amount of energy applied to the color forming member based on each of the plurality of color forming member images by using characteristic data in which a relationship between the amount of energy applied to the color forming member and a color of the color forming member included in the color forming member images is determined in advance.

## Amended claims

### Amended claims under Art. 19.1 PCT

1. An information processing apparatus comprising at least one processor,
wherein the processor is configured to:
acquire a plurality of color forming member images obtained by imaging a color forming member, which forms a color with density distribution corresponding to an amount of energy applied thereto; and
derive the amount of energy applied to the color forming member based on each of the plurality of color forming member images by using characteristic data in which a relationship between the amount of energy applied to the color forming member and a color of the color forming member included in the color forming member images is determined in advance.

2. The information processing apparatus according to claim 1,
wherein the processor is configured to perform, for every predetermined number of processing units, processing of acquiring the plurality of color forming member images and processing of deriving the amount of energy applied to the color forming member based on each of the plurality of color forming member images.

3. The information processing apparatus according to claim 2,
wherein the processor is configured to perform, for every predetermined number of processing units, the processing of acquiring the plurality of color forming member images, the processing of deriving the amount of energy applied to the color forming member based on each of the plurality of color forming member images, and processing of performing an evaluation with respect to each of amounts of energy based on predetermined reference information.

4. The information processing apparatus according to claim 3,
wherein the processor is configured to perform a comprehensive evaluation based on a result of the evaluation performed with respect to each of the amounts of energy.

5. The information processing apparatus according to claim 1,
wherein the processor is configured to store, in a database, the amount of energy derived based on each of the plurality of color forming member images as a single set of data.

6. The information processing apparatus according to claim 1,
wherein the processor is configured to:
generate one combined image by combining the plurality of color forming member images; and
derive the amount of energy applied to the color forming member based on the combined image.

7. The information processing apparatus according to claim 6,
wherein the processor is configured to evaluate, based on predetermined reference information, the amount of energy derived based on the combined image.

8. The information processing apparatus according to claim 6,
wherein the processor is configured to:
derive distribution of the amount of energy applied to the color forming member based on the combined image; and
generate a two-dimensional graph showing the distribution of the amount of energy.

9. The information processing apparatus according to claim 1,
wherein at least one of the plurality of color forming member images includes a patch for calibration with respect to the color of the color forming member, and
the processor is configured to perform the calibration with respect to the color of the color forming member included in each of the plurality of color forming member images by using the patch included in the at least one of the color forming member images.

10. The information processing apparatus according to claim 9,
wherein the processor is configured to:
perform the calibration with respect to the color of the color forming member by using the patch in a case where the color forming member image includes the patch; and
perform the calibration with respect to the color of the color forming member by using the patch included in another color forming member image in a case where the color forming member image does not include the patch.

11. (Amended) The information processing apparatus according to claim 1, wherein the processor is configured to perform batch processing in which processing of acquiring the plurality of color forming member images, and processing of deriving the of acquiring the plurality of color forming member images, and processing of deriving the amount of energy applied to the color forming member based on each of the plurality of color forming member images are performed for every predetermined number of processing units.

12. (Amended) An information processing method comprising processing of:
acquiring a plurality of color forming member images obtained by imaging a color forming member, which forms a color with density distribution corresponding to an amount of energy applied thereto; and
deriving the amount of energy applied to the color forming member based on each of the plurality of color forming member images by using characteristic data in which a relationship between the amount of energy applied to the color forming member and a color of the color forming member included in the color forming member images is determined in advance.

13. (New) An information processing program causing a computer to execute processing of:
acquiring a plurality of color forming member images obtained by imaging a color forming member, which forms a color with density distribution corresponding to an amount of energy applied thereto; and
deriving the amount of energy applied to the color forming member based on each of the plurality of color forming member images by using characteristic data in which a relationship between the amount of energy applied to the color forming member and a color of the color forming member included in the color forming member images is determined in advance.
